# EUROPÄISCHE PATENTANMELDUNG

(11) **EP 1 249 654 A1**
(43) Veröffentlichungstag der Anmeldung: **16.10.2002**
(21) Anmeldenummer: 01109080.0
(22) Anmeldetag: 12.04.2001
(51) Int. Cl.: F16L 9/12, F16L 11/04, B32B 1/08, B32B 27/08

(54) **Mehrschichtrohr**

(71) Anmelder: Rasmussen GmbH, 63477 Maintal (DE)
(72) Erfinder: Kertesz, Janos, 65719 Hofheim (DE)
(74) Vertreter: Knoblauch, Andreas, Dr.-Ing.

(57) **Zusammenfassung**

Ein Mehrschichtrohr hat eine erste äußere Schicht (1), eine zweite innere Diffusionssperrschicht (2) und eine dritte Schicht (3). Die Schichten (1,2, 3) sind unmittelbar miteinander verbunden. Hierfür enthalten die erste und dritte Schicht (1, 3) ein thermoplastisches Etheresterelastomer, während die zweite Schicht (2) ein thermoplastisches Polybutyleneterephthalat enthält. Die zweite Schicht hat eine Dicke von 0,1 bis 0,6 mm. Wenigstens eine Schicht hat eine Reißdehnung von wenigstens etwa 130%. Wenigstens eine Schicht enthält einen Hitzestabilisator. Das Mehrschichtrohr kann wenigstens 1000 Stunden einer Berührung mit Brennstoffen ohne Deklaminierung standhalten. Ferner kann es wenigstens 1000 Stunden einem Frostschutzmittel aus 5 bis 50 Gew.% Methanol in Wasser bei -20 bis 80°C ohne Deklaminierung standhalten. Das Mehrschichtrohr benötigt keine zwischengeschaltete Haftvermittlerschicht, um die Schichten zu verbinden. Außerdem trennen sich die Schichten nicht nach einer langzeitigen Berührung mit Brennstoff, Öl und Frostschutzmittel oder Erwärmung und Kühlung. Das Mehrschichtrohr kann in Kraftfahrzeugen als Brennstoffleitung oder Brennstoffdampfrückleitung oder - wiedergewinnungsleitung verwendet werden.

## Beschreibung

Aus der US-Patentschrift 5 678 611 ist ein Mehrschichtrohr bekannt, das als Brennstoffleitung oder Brennstoffdampfrückleitung oder -wiedergewinnungsleitung dient. Das Rohr enthält zwischen einem thermoplastischen äußeren Rohrteil und einer inneren Kohlenwasserstoffsperrschicht eine Verbindungsschicht aus einem Haftvermittler. Wenn ein Mehrschichtrohr mit einer Verbindungsschicht, z.B. gemäß der US-Patentschrift 5 678 611, in einem Kraftfahrzeug verwendet wird, trennen sich die Schichten häufig nach längerer Berührung mit Kraftstoff, Öl oder Frostschutzmittel, einem Gemisch aus Wasser und Alkohol, und Erwärmung oder Abkühlung.

Der Erfindung liegt die Aufgabe zugrunde, ein Mehrschichtrohr anzugeben, bei dem die Schichten eine dauerhafte Verbindung aufweisen und dennoch den bei Kraftfahrzeugen gestellten Anforderungen genügen.

Erfindungsgemäß enthält ein Mehrschichtrohr: eine erste thermoplastische Schicht, eine zweite innere thermoplastische Diffusionssperrschicht, die unmittelbar mit der ersten Schicht verbunden ist und eine Dicke von etwa 0,1 bis etwa 0,6 mm hat, und eine dritte Schicht, die mit der zweiten Schicht verbunden ist, wobei die erste und die dritte Schicht wenigstens ein thermoplastisches Etheresterelastomer und/oder ein schlagzähmodifiziertes thermoplastisches Polyester aufweisen, die zweite Schicht wenigstens ein Polybutylenterephthalat oder ein Polybutylennaphthalat aufweist, wenigstens eine der Schichten eine Reißdehnung von mindestens 130% aufweist, wenigstens eine der Schichten einen Stabilisator gegen Hitzeeinwirkung aufweist, das Mehrschichtrohr einer Langzeitkontaktierung von mindestens 1000 Stunden mit verschiedenen Kraftstoffen und Lagerung von mindestens 1000 Stunden in einem Gemisch aus 5 bis 50 Volumenprozent Methanol und Wasser zwischen -20°C und +80°C standhält, ohne daß die Schichten sich voneinander trennen.

Das erfindungsgemäße Mehrschichtrohr benötigt keine Verbindungs- oder Haftvermittlerschicht zwischen den thermoplastischen Schichten, um sie miteinander zu verbinden. Ferner delaminiert das Mehrschichtrohr nicht nach längerer Berührung mit Brennstoff, Öl und Frostschutzmittel oder Erwärmung und Kühlung. Das Mehrschichtrohr kann in Kraftfahrzeugen als Brennstoffleitung oder Brennstoffdampf-Rückleitung oder -wiedergewinnungsleitung verwendet werden.

Weiterbildungen sind in den Unteransprüchen angegeben.

Die Erfindung und ihre Weiterbildungen werden nachstehend anhand der beiliegenden Zeichnung bevorzugter Ausführungsbeispiele näher beschrieben. Es zeigen:
- Fig. 1: einen Axialschnitt durch ein erstes Ausführungsbeispiel eines erfindungsgemäßen Mehrschichtrohres aus drei Schichten und
- Fig. 2: ein zweites Ausführungsbeispiel eines erfindungsgemäßen Mehrschichtrohres aus vier Schichten.

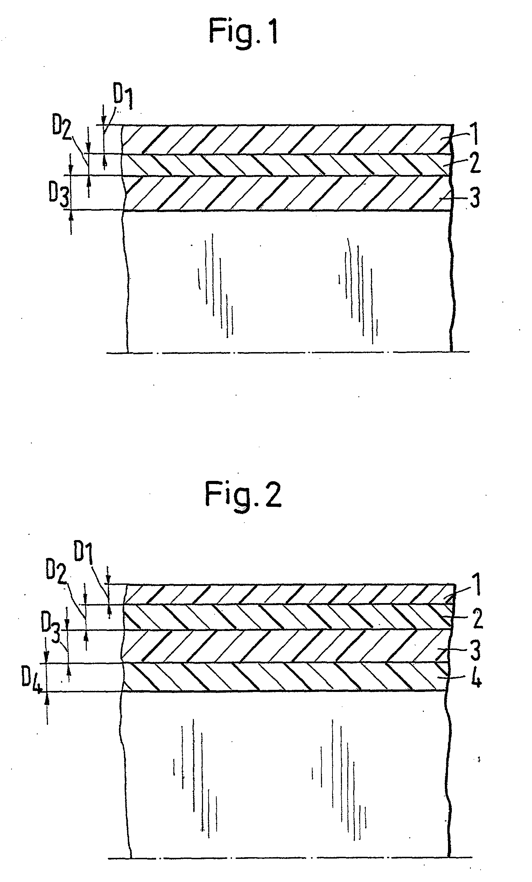

Das Mehrschichtrohr nach Fig. 1 enthält eine erste thermoplastische äußere Schicht 1, eine zweite thermoplastische innere Schicht 2, die mit der ersten Schicht 1 verbunden ist, und eine dritte thermoplastische Schicht 3, die mit der zweiten Schicht verbunden ist. Die drei Schichten sind stoffschlüssig miteinander verbunden oder verschmolzen, d.h. es befindet sich keine Haftvermittlerschicht zwischen den Schichten. Diese Art der Verbindung kann durch den Einschluß thermoplastischer Materialien erreicht werden, die so ausgewählt sind, daß die Materialien benachbarter Schichten weitgehend oder vollständig chemisch ähnlich sind. So kann das thermoplastische Material in benachbarten Schichten so ausgewählt sein, daß sich wenigstens ein thermoplastisches Material in jeder Schicht mit wenigstens einem thermoplastischen Material in der benachbarten Schicht verbindet oder mit dieser verschmilzt. Da einige Etherelastomere sich mit Polybutylenterephthalat verbinden, enthalten die erste Schicht 1 und die dritte Schicht 3 des Rohres wenigstens ein thermoplastisches Etheresterelelastomer (TEEE), während die zweite Schicht 2 wenigstens ein Polybutylentherephthalat (PBT) enthält.

Eine oder mehrere Schichten des Rohres können einen Haftvermittler enthalten, der Verbindungen oder Vernetzungen mit einem oder mehreren Haftvermittler(n) oder thermoplastischen Material(ien) in einer oder mehrerer der benachbarten Schichten bildet. So kann irgendein bekannte Haftvermittler in den Schichten des Rohres enthalten sein.

Alternativ, obwohl nicht bevorzugt, können die thermoplastischen Materialien in benachbarten Schichten so ausgewählt sein, daß keines der thermoplastischen Materialien in jeder Schicht mit einem thermoplastischen Material in einer benachbarten Schicht eine Verbindung eingeht oder mit diesem verschmilzt. Bei einer solchen Ausbildung sind in jeder Schicht Haftvermittler enthalten, um die Schichten zu verbinden.

Die zweite Schicht 2 verhindert, daß Materialien, die durch das Mehrschichtrohr strömen, z.B. Kohlenwasserstoffe, Wasser und Sauerstoff, aus dem Mehrschichtrohr ausdifundieren, d.h. die Schicht wirkt als Sperrschicht. Um die Permeabilität des Mehrschichtrohres für Kohlenwasserstoffe zu verringern und die chemische Widerstandsfähigkeit zu erhöhen, ist das thermoplastische Material der zweiten Schicht 2 vorzugsweise vernetzt.

Wenigstens eine Schicht, vorzugsweise die äußere Schicht 1, hat eine Reißdehnung von 130%. Die Schicht mit der größten Reißdehnung hat vorzugsweise eine Dicke von wenigstens etwa 1 mm.

Die äußere Schicht 1 hat vorzugsweise eine Dicke und eine Reißdehnung, die größere als die der inneren Schicht 2 sind.

Das Mehrschichtrohr kann weitere innere Schichten aufweisen. Vorzugsweise sind die weiteren inneren Schichten konzentrische Schichten. Jede weitere innere Schicht ist mit der benachbarten äußeren Schicht stoffschlüssig verbunden. Wenigstens eine der weiteren inneren Schichten ist mit der inneren Schicht 2 stoffschlüssig verbunden. Die Gesamtdicke der inneren Schicht 2 und aller weiteren inneren Schichten liegt vorzugsweise im Bereich von etwa 0,1 bis 0,6 mm. Die weiteren Schichten können ebenfalls das Hindurchdiffundieren von Kohlenwasserstoffen verhindern und/oder vernetzt sein.

Mindestens eine der Schichten enthält einen Stabilisator gegen Hitzeeinwirkung, um eine Langzeit-Hitzealterungsbeständigkeit zu gewährleisten. Hierfür kann irgendein bekannter Hitze-Stabilisator in einer oder mehreren der Schichten des Mehrschichtrohres enthalten sein.

Mindestens eine der Schichten ist vorzugsweise nicht elektrostatisch aufladbar. Der Oberflächenwiderstand der Schichten 1 und/oder 3 liegt im Bereich von etwa 1 bis etwa 10⁹ Ohm/cm² und vorzugsweise im Bereich von 10³ bis etwa 10⁹ Ohm/cm².

Ferner kann ein Flammschutzzusatz in einer oder mehreren Schichten des Mehrschichtrohres enthalten sein. Vorzugsweise ist der Flammschutzzusatz in der derjenigen Schicht enthalten, deren Reißdehnung wenigstens etwa 130% beträgt. Der Flammschutzzusatz kann an sich bekannt sein. In einer der Schichten können Glasfasern enthalten sein, um die Schicht zu verstärken.

Die stoffschlüssige Verbindung der Schichten des Mehrschichtrohres hält einer Langzeitkontaktierung mit verschiedenen Kraftstoffen stand. So kann das erfindungsgemäße Mehrschichtrohr mindestens 1000 Stunden und vorzugsweise mindestens 3000 Stunden einer Berührung mit Brennstoffen standhalten, ohne daß sich die Schichten trennen. Ferner hält die stoffschlüssige Verbindung einer langzeitigen Lagerung in einem Frostschutzmittel stand. So kann das Mehrschichtrohr mindestens 1000 Stunden und vorzugsweise mindestens 2000 Stunden einer Lagerung in einem Frostschutzmittelgemisch aus 5 bis 50 Vol.% Methanol und Wasser bei etwa -20 bis etwa 80°C standhalten, ohne daß sich die Schichten trennen.

Die Dickenverhältnisse der Schichten können nach bekannten Verfahren so optimiert sein, daß sie die verschiedenen Normen der Automobilindustrie erfüllen oder sogar überschreiten, zum Beispiel den Norm-Entwurf SAE XJ2260 vom 1. Mai 1996, die Test Specification GME 08 100 der General Motors Europe vom Januar 1991 und die Qualitätsvorschrift der Bayrische Motoren Werke AG von 1991.

Für das Dickenverhältnis der drei Schichten 1, 2 und 3, die jeweils die Dicke D₁, D₂ und D₃ aufweisen, gilt vorzugsweise: D₂ < D₁ ≤ D₃. Für das Reißdehnungsverhältnis der drei Schichten 1, 2 und 3, die jeweils die Reißdehnung R₁, R₂ und R₃ aufweisen, gilt vorzugsweise: R₂ < R₁ ≤ R₃.

Ein weiteres Ausführungsbeispiel der Erfindung ist in Fig. 2 dargestellt. Dieses Mehrschichtrohr hat vier Schichten 1, 2, 3 und 4 (von der äußersten zur innersten Schicht). Die ersten drei Schichten 1, 2 und 3 bestehen jeweils aus dem gleichen Material wie die zuvor erwähnten Schichten 1, 2 und 3 und können jeweils die gleiche Dicke und Reißdehnung wie diese haben. Die vierte und innerste Schicht 4 ist stoffschlüssig mit der Schicht 3 verbunden. Sie enthält im wesentlichen wenigstens eines der Materialien aus der Gruppe, die ein Polyolefin, Polyolefincopolymer, Polyolefinterpolymer, thermoplastisches Polyester, Polyamid, Fluorthermoplast und Polyacetal aufweist. Wenn die Dicke D4 der vierten Schicht 4 größer als oder gleich der Dicke D1 der ersten Schicht 1 ist, ist die Reißdehnung R₄ der vierten Schicht 4 vorzugsweise größer als die oder gleich der Reißdehnung R1 der ersten Schicht 1. Wenn die Dicke D₄ kleiner als die oder gleich der Dicke D₁ ist, ist die Reißdehnung R₄ generell kleiner oder gleich R₁.

Alternativ können die Dicken- und Reißdehnungsverhältnisse der vier Schichten 1, 2, 3 und 4 jeweils D₄ = D₁ < D₂ < D₃ und R₄ = R₁ < R₂ < R₃ sein.

Das erfindungsgemäße Mehrschichtrohr kann in bekannter Weise durch Koextrusion hergestellt sein.

Dem Fachmann liegen zahlreiche Abwandlungen der Erfindung aufgrund der vorstehenden Beschreibung auf der Hand. Beispielsweise kann das Mehrschichtrohr wenigstens eine weitere Schicht aufweisen, die beispielsweise ein weiteres thermoplastisches Material aufweist. Derartige Abwandlungen liegen im Schutzumfang der anliegenden Ansprüche.

## Patentansprüche

1. Mehrschichtrohr mit: einer ersten thermoplastischen Schicht (1), einer zweiten inneren thermoplastischen Diffusionssperrschicht (2), die unmittelbar mit der ersten Schicht (1) verbunden ist und eine Dicke von etwa 0,1 bis etwa 0,6 mm hat, und einer dritten Schicht (3), die mit der zweiten Schicht (2) verbunden ist, wobei die erste und die dritte Schicht (1, 3) wenigstens ein thermoplastisches Etheresterelastomer und/oder ein schlagzähmodifiziertes thermoplastisches Polyester aufweisen, die zweite Schicht (2) wenigstens ein Polybutylenterephthalat oder ein Polybutylennaphthalat aufweist, wenigstens eine der Schichten eine Reißdehnung von mindestens 130% aufweist, wenigstens eine der Schichten einen Stabilisator gegen Hitzeeinwirkung aufweist, das Mehrschichtrohr einer Langzeitkontaktierung von mindestens 1000 Stunden mit verschiedenen Kraftstoffen und Lagerung von mindestens 1000 Stunden in einem Gemisch aus 5 bis 50 Volumenprozent Methanol und Wasser zwischen -20°C und +80°C standhält, ohne daß die Schichten sich voneinander trennen.

2. Mehrschichtrohr nach Anspruch 1, bei dem die äußere Schicht (1) eine Reißdehnung von wenigstens 130% aufweist.

3. Mehrschichtrohr nach Anspruch 1 oder 2, bei der die Gesamtdicke der zweiten Schicht (2) und der dritten Schicht (3) im Bereich von etwa 0,1 bis etwa 0,6 mm liegt.

4. Mehrschichtrohr nach einem der Ansprüche 1 bis 3, bei dem wenigstens eine Schicht einen Haftvermittler enthält.

5. Mehrschichtrohr nach einem der Ansprüche 1 bis 4, bei dem wenigstens eine Schicht nicht elektrisch aufladbar ist.

6. Mehrschichtrohr nach einem der Ansprüche 1 bis 4, bei dem der Oberflächenwiderstand wenigstens einer Schicht im Bereich von etwa 1 bis etwa 10⁹ Ohm/cm² liegt.

7. Mehrschichtrohr nach einem der Ansprüche 1 bis 6, bei dem das thermoplastische Material der Schicht mit der Reißdehnung von 130% aus der Gruppe ausgewählt ist, die aus Polyesterelastomeren, Polyamidelastomeren und einer Kombination dieser Materialien besteht.

8. Mehrschichtrohr nach einem der Ansprüche 1 bis 7, bei dem die zweite thermoplastische Diffusionssperrschicht eine Kohlenwasserstoffsperrschicht ist.

9. Mehrschichtrohr nach einem der Ansprüche 1 bis 8, bei dem das thermoplastische Material wenigstens einer der Schichten vernetzt ist.

10. Mehrschichtrohr nach einem der Ansprüche 1 bis 9, bei dem das thermoplastische Material der zweiten Schicht (2) vernetzt ist.

11. Mehrschichtrohr nach einem der Ansprüche 1 bis 10, bei dem das thermoplastische Material wenigstens einer der Schichten einen Flammschutzzusatz enthält.

12. Mehrschichtrohr nach einem der Ansprüche 1 bis 11, **dadurch gekennzeichnet, daß** die Schlagzähmodifizierung des thermoplastischen Polyesters mittels eines Polyolefins oder Elastomers bewirkt ist.

13. Mehrschichtrohr nach einem der Ansprüche 1 bis 12, **dadurch gekennzeichnet, daß** es eine vierte Schicht (4) aufweist, die von der ersten, zweiten und dritten Schicht (1-3) umgeben ist und deren Material aus wenigstens einem Material der Gruppe ausgewählt ist, die ein Polyolefin, Polyolefincopolymer, Polyolefinterpolymer, thermoplastisches Polyester, Polyamid, Fluorthermoplast und Polyacetal aufweist.
